(19) Europäisches Patentamt
European Patent Office
Office européen des brevets

(11) Veröffentlichungsnummer: **0 029 572**
**B1**

(12) **EUROPÄISCHE PATENTSCHRIFT**

(45) Veröffentlichungstag der Patentschrift: **13.06.84**

(21) Anmeldenummer: **80107133.3**

(22) Anmeldetag: **18.11.80**

(51) Int. Cl.³: **D 01 D 5/11**, D 01 F 6/66, D 21 H 5/20

# (54) Polyoxymethylenfibride, Verfahren zu ihrer Herstellung und ihre Verwendung.

(30) Priorität: **24.11.79 DE 2947490**

(43) Veröffentlichungstag der Anmeldung:
**03.06.81 Patentblatt 81/22**

(45) Bekanntmachung des Hinweises auf die Patenterteilung:
**13.06.84 Patentblatt 84/24**

(84) Benannte Vertragsstaaten:
**AT BE CH DE FR GB IT LI NL SE**

(56) Entgegenhaltungen:
**BE - A - 568 524**
**DE - A - 2 343 543**
**DE - B - 1 290 040**

(73) Patentinhaber: **HOECHST AKTIENGESELLSCHAFT**
**Postfach 80 03 20**
**D-6230 Frankfurt am Main 80 (DE)**

(72) Erfinder: **Cherdron, Harald, Prof. Dr.**
**Eichenweg 40**
**D-6200 Wiesbaden (DE)**
Erfinder: **Gordon, Wolfgang, Dr.**
**Berliner Strasse 10**
**D-6238 Hofheim am Taunus (DE)**
Erfinder: **Kloos, Friedrich, Dr.**
**Südring 112**
**D-6500 Mainz (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

EP 0 029 572 B1

**Beschreibung**

Unter Fibriden versteht man in Längsrichtung orientierte Fäserchen mit zellstoffähnlicher Struktur, d.h. mit endlicher, aber uneinheitlicher Länge, unregelmäßiger Dicke, zerklüfteter Oberfläche und hohem Verzweigungsgrad. Durch ihre Struktur sind sie u.a. gut für die Papierherstellung geeignet.

Die Herstellung solcher Fibride wird z.B. in der DE—PS 1.290.040 beschrieben. Danach werden zunächst Plexusfäden hergestellt, diese dann in Stapellängen zerschnitten, die Stapelfaserteilchen in einer Flüssigkeit suspendiert und die in Suspension befindlichen Teilchen in an sich bekannter Weise zerfasert. Als Plexusfaden wird hier ein fadenartiges Erzeugnis aus einem kristallinen Kunststoff mit einem von tunnelartigen Kanälen und Hohlräumen praktisch freien dredimensionalen Netzwerk aus vielen molekular orientierten film- bzw. bandartigen Fibrdien von weniger als $2\mu$ Dicke bezeichnet, die sich der Länge nach in regellosen Abständen miteinander vereinigen und voneinander trennen und vorzugsweise in Richtung der Längsachse orientiert sind.

Diese Plexusfäden und deren Herstellung sind in der belgischen Patentschrift 568.524 näher beschrieben. Zur Herstellung der Plexusfäden wird dabei eine unter ihrem autogenen oder höherem Druck stehende Lösung eines synthetischen Polymeren bei einer oberhalb des bei normalem Druck gemessenen Siedepunkt des Lösungsmittels liegenden Temperatur durch eine Öffnung in einen unter niedrigerem Druck stehendem Raum ausgepreßt. Man bezeichnet diese Herstellung von Plexusfäden auch als Flash-Spinnen oder Entspannungs-Spinnen.

Auch aus Polyoxymethylen kann man auf diesem Weg Plexusfäden herstellen und dann zu Fibriden zerfasern. Als Lösungsmittel zur Herstellung der Plexusfäden werden in der BE—PS 568 524 aprotische Lösungsmittel und zwar Methylenchlorid, Äthylenchlorid, Acetonitril und Methyläthylketon verwendet. Wie Versuche gezeigt habe, entstehen selbst bei äußerst niedrigen Polymerkonzentrationen z.B. von 1 Gew.-% im Methyläthylketon keine Fibride, sondern ausschließlich Plexusfäden. Da Plexusfäden zur Papierherstellung ungeeignet sind, müssen sie nach der besagten DE—PS 1.290.040 in einem zweiten Verfahrensschritt zu Fibriden verarbeitet werden, wodurch das Verfahren aufwendig wird. Die so erhaltenen Polyoxymethylenfibride besitzen insbesondere eine relativ geringe spezifische Oberfläche sowie einen geringen Mahlgrad und die daraus hergestellten Papiere weisen relativ geringe Festigkeiten auf.

Bei der Fällung von Polyoxymethylen aus seinen Lösungen durch Unterkühlen der Lösung oder durch Austragen in Fällungsmittel werden ebenfalls fasrige Produkte erhalten (vgl. DE—AS 1.241.116). Daraus können jedoch keine Papiere mit befriedigenden Eigenschaften hergestellt werden, da diese Fasern sehr kurz und dick sind und durch zweidimensionale folienartige Gebilde stark verunreinigt sind.

Aus der japanischen Patentanmeldung 71 41 110 ist es schließlich auch bekannt, daß man durch Ausrühren einer unterkühlten Polyoxymethylenlösung Fasern erhält. Diese Verfahren ist aber zu langwierig und auch wegen seiner niedrigen Ausbeute für ein technisches Verfahren nicht geeignet.

Die Aufgabe vorliegender Erfindung bestand nun drain, Polyoxymethylen-Fibride und ein Verfahren zu deren Herstellung bereitzustellen, welche die Nachteile des Standes der Technik und insbesondere vorstehend genannte Nachteile nicht oder zumindestens weitgehend nicht besitzen.

Gegenstand der Erfindung sind daher Polyoxymethylen-Fibride mit einer reduzierten spezifischen Viskosität von 0,4 und 2,0 $dl \times g^{-1}$, vorzugsweise 0,6 bis 1,20 $dl \times g^{-1}$ (gemessen in Butyrolacton, das 2 Gew.-% Diphenylamin enthält, bei 140°C in einer Konzentration von 0,5 g/100 ml), einer spezifischen Oberfläche (nach BET mit Argon) von 50 bis 200 $m^2/g$ gefriertroeknet, vorzugsweise 70 bis 110 $m^2/g$ und einem Mahlgrad nach Schopper-Riegler) von 30—80° SR, vorzugsweise 40 bis 70° SR.

Die vorliegende Erfindung betrifft weiterhin ein Verfahren zur Herstellung von Polyoxymethylen-Fibriden durch Flash-Verdampfung einer überhitzten Lösung des Polymeren durch eine Düse in eine Zone niedrigen Druckes, dadurch gekennzeichnet, daß als Lösungsmittel eine Mischung von 50—95 Gew.-% eines niederen Alkohols mit 1—4 C-Atomen und 5—50 Gew.-% Wasser verwendet wird.

Als Material zur Herstellung der erfindungsgemäßen Fibride eignen sich die bekannten Polyoxymethylene. Darunter seien Homopolymerisate des Formaldehyds oder eines cyclischen Oligomeren des Formaldehyds, z.B. Trioxan verstanden, deren Hydroxylendgruppen in bekannter Weise chemisch, z.B. durch Verätherung oder Veresterung gegen Abbau stabilisiert sind.

Weiterhin umfaßt der Begriff Polyoxymethylene erfindungsgemäß auch Copolymere des Formaldehyds oder eines cyclischen Oligomeren des Formaldehyds, vorzugsweise Trioxan, wobei die Copolymeren neben Oxymethyleneinheiten in der Hauptvalenzkette Oxyalkyleneinheiten mit mindestens zwei, bevorzugt zwei bis acht und speziell zwei bis vier benachbarten Kohlenstoffatomen aufweisen und primäre Alkoholendgruppen besitzen. Der Comonomerenanteil in den Copolymeren beträgt zweckmäßigerweise 0,1 bis 20, vorzugsweise 0,5 bis 10 Gew.-% und insbesondere 0,7—5 Gew.-%.

Als Verbindungen, die für die Copolymerisation mit Formaldehyd oder cyclischen Oligomeren des Formaldehyds, vorzugsweise Trioxan, geeignet sind, werden vor allem cyclische Äther, vorzugsweise mit 3, 4 oder 5 Ringgliedern und/oder vom Trioxan verschiedene cyclische Acetale, vorzugsweise Formale mit 5 bis 11, vorzugsweise 5, 6 oder 7 Ringgliedern und/oder lineare Polyacetale, vorzugsweise Polyformale verwendet.

Als Comonomere für Trioxan sind besonders Verbindungen der Formel

$$\underbrace{CH_2—[CR^1H]_x—[O—(CR^2H)_z]_y—O}$$

geeignet, in der (A) $R^1$ und $R^2$ gleich oder verschieden sind und jeweils ein Wasserstoffatom, einen aliphatischen Alkylrest mit 1—6, vorzugsweise 1, 2, 3 oder 4 Kohlenstoffatomen oder einen Phenylrest bedeuten und (a) x gleich 1, 2 oder 3 und y gleich Null is oder (b) x gleich Null, y gleich 1, 2 oder 3 und z gleich 2 ist oder (c) x gleich Null, y gleich 1 und z gleich 3, 4, 5 oder 6 ist, oder (B) $R^1$ einen Alkoxymethylrest mit 2—6, vorzugsweise 2, 3 oder 4 Kohlenstoffatomen oder einen Phenoxymethylrest bedeutet, wobei x gleich 1 und y gleich Null oder y und z gleich 1 ist und $R^2$ die obengenannte Bedeutung hat.

Als cyclische Äther werden vor allem Epoxide z.B. Äthylenoxid, Propylenoxid, Styroloxid, Cyclohexenoxid, Oxacyclobutan und Phenylglycidyläther eingesetzt.

Als cyclische Acetale eignen sich vor allem cyclische Formale von aliphatischen oder cycloaliphatischen $\alpha,\omega$-Diolen mit 2 bis 8, vorzugsweise 2, 3 oder 4 Kohlenstoffatomen, deren Kohlenstoffkette in Abständen von 2 Kohlenstoffatomen durch ein Sauerstoffatom unterbrochen sein kann, z.B. Glykolformal (1,3-Dioxolan), Propandiolformal (1,3-Dioxan), Butandiolformal (1,3-Dioxepan), und Diglykolformal (1,3,6-Trioxocan) sowie 4-Chlormethyl-1,3-dioxolan und Hexandiolformal (1,3-Dioxonan). Auch ungesättigte Formale wie Butendiolformal (1,3-Dioxacyclohepten-[5] kommen in Frage.

Als lineare Polyacetale eignen sich sowohl Homo- oder Copolymere der vorstehend definierten cyclischen Acetale als auch lineare Kondensate aus aliphatischen oder cycloaliphatischen $\alpha,\omega$-Diolen mit aliphatischen Aldehyden oder Thioaldehyden, vorzugsweise Formaldehyd. Insbesondere werden Homopolymere linearer Formale von aliphatischen $\alpha,\omega$-Diolen mit 2—8, vorzugsweise 2—4 Kohlenstoffatomen verwendet, z.B. Poly(1,3-dioxolan), Poly-(1,3-dioxan) und Poly-(1,3-dioxepan).

Als zusätzliche Comonomere für Trioxan werden gegebenenfalls noch Verbindungen mit mehreren polymerisierbaren Gruppen im Molekül, z.B. Alkylglycidylformale, Polyglykoldiglycidylether, Alkandioldiglycidylether oder Bis(alkantriol)-triformale, verwendet, und zwar in einer Menge von 0,05 bis 5, vorzugsweise 0,1 bis 2 Gew.-%, bezogen auf die Gesamtmonomermenge. Derartige zusätzliche Comonomere sind beispielsweise in der DE—AS 2.101.817 beschrieben.

Die Werte für die reduzierte spezifische Viskosität (RSV-Werte) der erfindungsgemäß eingesetzten Polyoxymethylene und damit auch der daraus erhaltenen Fibriden liegen im allgemeinen zwischen 0,4 und 2,0 $dl \cdot g^{-1}$, vorzugsweise zwischen 0,6 und 1,20 $dl \cdot g^{-1}$ (gemessen in Butyrolacton, das 2 Gew.-% Diphenylamin enthält, bei 140°C in einer Konzentration von 0,5 g/100 ml).

Die Kristallitschmelzpunkte der Polyoxymethylene liegen im Bereich von 140—180°C, vorzugsweise 150°C bis 170°C und ihre Dichten zwischen 1,38 und 1,45 $g \cdot ml^{-1}$, vorzugsweise 1,40 und 1,43 $g \cdot ml^{-1}$ (gemessen nach DIN 53 479).

Verwendet man Polymere mit einem niedrigeren RSV-Wert als oben angegeben, so entstehen zwar auch Fibride; sie werden allerdings relativ kurz und sind in zunehmenden Maße mit nichtfaserigen Anteilen vermengt. Durch den RSV-Wert des Polymeren können somit die Faserlänge, der Schlankheit- und der Verästelungsgrad der Fibride gesteuert werden, so daß die bevorzugten Bereiche von dem Einsatzgebiet der Fibride abhängen. Bei höheren RSV-Werten als den obigen wächst die Gefahr des Entstehens von Plexusfäden oder von überwiegend zweidimensionalen, folienartigen Gebilden.

Die erfindungsgemäß verwendeten, vorzugsweise binären oder ternären Oxymethylen-Copolymeren werden in bekannter Weise durch Polymerisieren der Monomeren in Gegenwart kationisch wirksamer Katalysatoren bei Temperaturen zwischen 0 und 100°C, vorzugsweise zwischen 50 und 90°C, hergestellt (vgl. z.B. US-Patentschrift 30 27 352). Als Katalysatoren werden hierbei beispielsweise Lewissäuren, z.B. Bortrifluorid und Antimonpentafluorid, und Komplexverbindungen von Lewissäuren, vorzugsweise Ätherate, z.B. Bortrifluoriddiethylätherat und Bortrifluorid-di-tert.-butylätherat, verwendet. Ferner sind geeignet Protonensäuren, z.B. Perchlorsäure, sowie salzartige Verbindungen, z.B. Triphenylmethylhexafluorophosphat, Triethyloxoniumtetrafluoroborat oder Acetylperchlorat. Die Polymerisation kann in Masse, Suspension oder Lösung erfolgen. Zur Entfernung instabiler Anteile werden die Copolymeren zweckmäßigerweise einem thermischen oder hydrolytischen kontrollierten, partiellen Abbau bis zu primären Alkoholendgruppen unterworfen (vgl. US-Patentschriften 31 03 499 und 32 19 623).

Die erfindungsgemäß verwendeten Homopolymeren des Formaldehyds oder des Trioxans werden ebenfalls in bekannter Weise durch katalytisches Polymerisieren des Monomeren hergestellt (vgl. z.B. US-Patentschriften 27 68 994 und 2.989.505).

Die erfindungsgemäßen Fibride weisen eine unregelmäßige Länge auf, die zumeist bei etwa 0,1 bis 5 mm, vorzugsweise 0,2 bis 2 mm liegt. Der Querschnitt ist ebenfalls unregelmäßig in Form und Größe; der scheinbare Durchmesser liegt überwiegend bei etwa 1 bis 200 $\mu m$, vorzugsweise 2 bis 50 $\mu m$.

Da die erfindungsgemäßen Fibride stark verzweigt sind, besitzen sie auch eine hohe spezifische Oberfläche (nach BET mit Argon) von 50 bis 200 $m^2/g$, vorzugsweise 70 bis 110 $m^2/g$, wobei die

Proben vorher durch Gefriertrocknung getrocknet werden. Auch der Mahlgrad liegt dementsprechend hoch und beträgt 30 bis 80° SR, vorzugsweise 40 bis 70° SR. Die Bestimmung des Mahlgrades erfolgt als Schopper-Riegler-Wert nach Merkblatt V/7/61 (Alte Fassung 107) des Vereins der Zellstoff- und Papier-Chemiker und Ingenieure (ausgegeben am 1 Juli 1961).

Die erfindungsgemäßen Polyoxymethylenfibride besitzen hydrophile Oberflächeneigenschaften und sind daher—zumeist auch ohne Netzmittel—in Wasser leicht dispergierbar. Daraus hergestellte Filter haben verbesserte adsorptive Eigenschaften. In Sonderfällen kann es auch zweckmäßig sein, durch Zusatz von geeigneten Hydrophobierungsmitteln hydrohobe Oberflächeneigenschaften zu erzeugen.

Aufgrund ihrer verzweigten Morphologie lassen sich die erfindungsgemäßen Fibride sehr gut in bekannter Weise, etwa wie in der DE—PS 1.290.040 beschrieben, zu Papier verarbeiten. Die Festigkeitseigenschaften dieser reinen Polyoxymethylen-Papiere (Reißfestigkeit, initiale Naßfestigkeit, Oberflächenfestigkeit, Z-Reißfestigkeit, Falzzahl) liegen dabei über denen von entsprechenden Papieren gemäß Stand der Technik. So beträgt die Reißfestigkeit der aus den erfindungsgemäßen Fibriden auf einem Rapid-Köthen Blattbildungsgerät hergestellten Papierblätter 2 bis 25 $N/mm^2$, vorzugsweise 4 bis 20 $N/mm^2$ und insbesondere 7 bis 17 $N/mm^2$, gemessen mit dem Instron-Prüfgerät bei einem Gewicht der Blätter von 160 $g/m^2$, einer Probenbreite von 15 mm, einer Dehnungsgeschwindigkeit von 10 mm/Min und einer Meßlänge von 100 mm. Die Messungen werden bei 23°C und einer relativen Feuchtigkeit von 50% durchgeführt.

Auch in Mischung mit anderen Faserstoffen, wie Zellstoff, Cellulosefasern und Kunstfasern lassen sich ausgezeichnete Papiere herstellen, die in üblicher Weise geglättet, gestrichen, kaschiert und bedruckt werden können. Auch die Festigkeitseigenschaften dieser Mischpapiere sind wesentlich höher als die vergleichbarer Papiere aus bekannten Polyoxymethylenfibriden.

Die erfindungsgemäßen POM-Fibride können beispielsweise für Tapeten, Filter, Etiketten, Diagrammpapiere und andere Spezialpapiere etc. eingesetzt werden. Auch auf Kartonmaschinen sind die Polyoxymethylenfibride verarbeitbar, wobei die resultierenden Pappen eine ausgezeichnete Resistenz gegen Wasser haben. Ferner sind die erfindungsgemäßen Polyoxymethylenfibride in "Non-Wowens" einsetzbar und können als Verdickungsmittel in Kaltbitumen, in Farben, Putzen, Klebstoffen, Dichtungsmassen und Beschichtmaterialien auf Basis ungesättigter Polyester, Epoxidharzen, Bitumenpasten und PVC-Plastisolen verwendet werden.

Bei dem erfindungsgemäßen Herstellungsverfahren für die Fibride wird die bekannte Flash-Verdampfung einer überhitzten und unter Druck stehenden Lösung des Polymeren in eine Zone niedrigen Druckes durchgeführt, wie sie beispielsweise in der BE—PS 568.524 beschrieben ist.

Hierzu stellt man zunächst eine vorzugsweise homogene Lösung des Polymeren her, wobei man je nach Herstellverfahren von trockenem oder lösungsmittelfeuchtem Pulver bzw. Granulat ausgehen kann und das Polymere mit dem Lösungsmittel vermischt und beispielsweise in Druckautoklaven unter Rührung z.B. durch Dampfmantelheizung oder durch Einblasen von Dampf erhitzt. Falls die Polyoxymethylene bei der Polymerisation bzw. dem sich daran anschließenden Stabilisierungs- und Aufarbeitungsverfahren als Lösung oder Suspension in einer Alkohol/Wasser-Mischung der erfindungsgemäßen Zusammensetzung anfallen, so kann diese auch direkt für das erfindungsgemäße Verfahren eingesetzt werden.

Erfindungsgemäß wird—wie bereits offenbart—als Lösungsmittel eine Mischung von 50—95 Gew.-% eines niederen Alkohols mit 1—4 C-Atomen und 5—50 Gew.-% Wasser, jeweils bezogen auf das gesamte Lösungsmittelgemisch, eingesetzt. Als niedere Alkohole kommen hierfür beispielsweise Methanol, Äthanol, Isopropanol, n-Propanol, n-Butanol, i-Butanol oder t-Butanol oder Gemische dieser Alkohole in Frage. Bei Verwendung von höheren Alkoholen mit mehr als 4 C-Atomen, beispielsweise n-Hexanol entstehen zwar auch Fibride, jedoch ist dann die erforderliche Temperatur zur Herstellung der Lösung relativ hoch. Bevorzugt werden Methanol und Isopropanol eingesetzt.

Das Mischungsverhältnis von Alkohol und Wasser ist für die Fibridherstellung von wesentlicher Bedeutung. Verwendet man z.B. weniger als 50 Gew.-% des niederen Alkohols und mehr als 50 Gew.-% Wasser, so entstehen leicht Plexusfäden. Diese Grenze zwischen der Entstehung von Fibriden und Plexusfäden ist allerdings nicht scharf und läßt sich noch in gewissem Umfange durch die Wahl der Temperatur und der Konzentration der Lösung, durch die Wahl des Molekulargewichtes und der Dimensionierung der Düse sowie der Höhe des Druckes in der Entspannungszone beeinflussen. Mit steigender Temperatur, sinkender Polymer-Konzentration und sinkendem Molekulargewicht sowie mit steigendem Verhältnis von Länge/Durchmesser der Düse und sinkendem Druck in der Entspannungszone verschiebt sich diese Grenze etwas zur wasserreicheren Seite. Verwendet man mehr als 95% des niederen Alkohols und weniger als 5% Wasser, so wird die erforderliche Lösetemperatur zumeist unwirtschaftlich hoch. Bevorzugt wird eine Mischung aus 45—10 Gew.-% Wasser und 55—90 Gew.-% niederer Alkohol.

Die Konzentration des Polymeren in dem Lösungsmittelgemisch beträgt in der Regel zwischen 10 und 300 g pro Liter Lösung, vorzugsweise zwischen 50 und 200 g pro Liter. Geringere Konzentrationen sind in der Regel unwirtschaftlich, da sie einen hohen Lösungsmittelumlauf erfordern; höhere Konzentrationen beinhalten häufig die Gefahr der Bildung von Plexusfäden. Die obere Grenze der

Polymerkonzentration hängt dabei in gewißem Umfang vom Molekulargewicht ab; je niedriger das Molekulargewicht, umso höher die zulässige Konzentration.

Die Temperatur der Lösung des Polyoxymethylens hängt vom Molekulargewicht des Polymeren, der Art und Menge des Comonomeren und von der Lösungsmittelzusammensetzung ab.

Als untere Temperaturgrenze ist—soweit homogene Lösungen zum Einsatz kommen—die erforderliche Lösetemperatur anzusehen, während die obere Temperaturgrenze im wesentlichen nur durch wirtschaftliche Überlegungen begrenzt wird. Die Lösetemperatur ist für viele Beispiele bekannt und kann andernfalls leicht vom Fachmann aus bekannten Daten interpoliert oder experimentell ermittelt werden. In jedem Fall muß die Temperaturuntergrenze so liegen, daß bei den gewählten Druckbedingungen in der Entspannungszone eine für die Fibridbildung ausreichende Verdampfung erfolgt. Das ist in der Regel der Fall, wenn side etwa 30°C oberhalb des Siedepunktes bei Normaldruck ist und gleichzeitig die Erstarrungstemperatur des Polymeren erreicht wird. Für die bevorzugten Alkohole in ihren bevorzugten Mischungsverhältnissen liegt der bevorzugte Temperaturbereich zwischen 150 und 180°C.

Die Lösung steht in der Regel unter dem Eigendampfdruck des Lösungsmittelgemisches bei dieser Temperatur, jedoch kann er durch Intergasdruck oder durch eine Pump beträchtlich erhöht werden. Im allgemeinen beträgt er zwischen 15 und 60 Bar, vorzugsweise zwischen 15 und 30 Bar.

Die Lösung kann neben den Polymeren noch Hilfsstoffe aus der Polymerisation enthalten, z.B. Zersetzungsprodukte der Katalysatoren für die kationische Polymerisation, die in der GB—PS 11 46 649, in den DE—OSen 15 95 705 und 15 95 668 sowie in den DE—ASen 1 199 504 und 1 175 882 beschrieben sind, oder basisch reagierende Verbindungen zur Entfernung instabiler Anteile bis zur primären Alkoholendgruppe (z.B. niedere tertiäre aliphatische Amine wie Triäthyl- oder Triäthanolamin oder eines sekundären Alkaliphosphats wie Dinatriumhydrogenphosphat (vgl. US—PSen 31 74 948, 32 19 623 und 36 66 714) sowie die entstehenden Umsetzungsprodukte, z.B. Methylal, Trioxan, Tetroxan, Ameisensäure und Methylformiat.

Ferner kann die Polymerisatlösung die verschiedensten bekannten Zusatzstoffe enthalten. Als solche kommen beispielsweise die üblichen Nukleierungsmittel in Betracht, welche die Kristallisation beschleunigen und mit deren Hilfe die Morphologie der Fibride beeinflußt werden kann, wie z.B. verzweigte oder vernetzte Polyoxymethylene, Talkum oder Bornitrid (vgl. DE—PS 2.101.817, DE—OS 1 940 132).

Weiterhin sind hier die bekannten Stabilisatoren gegen den Einfluß von Wärme, Sauerstoff und/oder Licht zu nennen, wie sie etwa in der DE—OS 2.043.498 beschrieben sind. Insbesondere eignen sich hierzu Bisphenolverbindungen, Erdalkalisalze von Carbonsäuren sowie Guanidinverbindungen. Als Bisphenolverbindungen werden hauptsächlich Ester von ein- oder zweifach mit einem, 1—4 Kohlenstoffatome enthaltenden Alkylrest kernsubstituierten einbasigen 4-Hydroxyphenylalkansäuren, die 7—13, vorzugsweise 7, 8 oder 9 Kohlenstoffatome enthalten, mit aliphatischen zwei-, drei- oder vierwertigen Alkoholen, die 2—6, vorzugsweise 2, 3 oder 4 Kohlenstoffatome enthalten, verwendet, z.B. Ester der ω-(3-Tert.-butyl-4-hydroxy-phenyl)-pentansäure, β-(3-Methyl-5-tert.-butyl-4-hydroxy-phenyl)-propionsäure, (3,5-Ditert.-butyl-4-hydroxyphenyl)-essigsäure, β-(3,5-Di-tert.-butyl-4-hydroxy-phenyl)-propionsäure oder (3,5-Di-isopropyl-4-hydroxyphenyl)-essigsäure mit Äthylenglykol, Propandiol-(1,2), Propandiol-(1,3), Butandiol-(1,4), Hexandiol-(1,6), 1,1,1-Trimethyloläthan oder Pentaerythrit.

Als Erdalkalisalze von Carbonsäuren finden insbesondere Erdalkalisalze von aliphatischen, vorzugsweise hydroxylgruppenhaltigen, ein-, zwei- oder dreibasigen Carbonsäuren mit 2—20, vorzugsweise 3—9 Kohlenstoffatomen Einsatz, z.B. die Calcium- oder Magnesiumsalze der Stearinsäure, Rizinolsäure, Milchsäure, Mandelsäure, Äpfelsäure oder Zitronensäure.

Als Guanidinverbindungen kommen Verbindungen der Formel

$$NC—NH—\underset{\underset{NH}{\|}}{C}—NH—R$$

in Betracht, in der R ein Wasserstoffatom, eine Cyanogruppe oder einen Alkylrest mit 1—6 Kohlenstoffatomen bedeutet, z.B. Cyanoguanidin, N-Cyano-N'-methyl-guanidin, N-Cyano-N'-äthylguanidin, N-Cyano-N'-isopropylguanidin, N-Cyano-N'-tert.-butylguanidin oder N,N'-Dicyanoguanidin. Die Guanidinverbindung wird gegebenenfalls in einer Menge von 0,01—1, vorzugsweise 0,02—0,5 Gew.-%, bezogen auf das Gesamtgewicht eingesetzt.

Ferner kann die Lösung auch noch andere Zusatzstoffe wie bekannte Antistatika, Flammschutzmittel oder Gleit- bzw. Schmiermittel etc. enthalten.

Gefüllte Fibride sind erfindungsgemäß erhältlich, indem mineralische Füllstoffe in der Polymerlösung gleichmäßig suspendiert werden und dann, wie beschrieben, verfahren wird. Geeignete Pigmente sind dabei Titandioxid, Calciumcarbonat, Talkum, Wollastonit, Dolomit, Siliziumdioxid etc.

Gefärbte Polyoxymethylenfibride kann man dadurch erhalten, daß man Farbstoffe in der Polymerlösung löst oder dispergiert. Für manche Anwendungen ist auch der Zusatz von optischen Aufhellern interessant.

Zur Verbesserung der Dispergierbarkeit der Polyoxymethylenfibride können der Lösung auch oberflächenaktive Mittel wie oxäthylierte Alkohole, Carbonsäuren oder Amine, Alkansulfonate oder hydroxylgruppentragende Polymere wie Polyvinylalkohol oder Carboxymethylzellulose zugesetzt werden.

Die Polymerlösung wird dann durch eine oder mehrere Düsen gedrückt, deren Gestaltung (Größe, Form und Länge) zwar die Abmessungen der entstehenden Fibride beeinflussen und die aufgegebenen Konzentrationsgrenzen des Lösungsmittelgemisches etwas verändern kann, die jedoch nicht erfindungswesentlich ist. Geeignete Düsen sind beispielsweise in der BE—PS 568.524 beschrieben. Erwähnt seien hier einfache Düsen mit einem Durchmesser von beispielsweise 0,5—5 mm und 0,1 bis 1000 cm Länge, konische Düsen mit vergleichbarem Ringspalt, sowie Zweistoffdüsen, wobei als Treibmedium Inertgase wie Stickstoff, Wasserdampf etc. oder Flüssigkeiten, z.B. überhitztes Wasser, verwendet werden kann.

Durch die Düse gelangt die Polymerlösung in eine Zone niedrigen Druckes, in der das Lösungsmittel ganz oder teilweise spontan verdampft. Es ist dabei auch möglich, die Lösung vor dem Austritt aus der Düse einer gesteuerten Druckentspannung zu unterwerfen, in dem man sie beispielsweise eine Kammer oder ein Rohr passieren läßt, das einen größeren Durchmesser als die Düsenaustrittsöffnung hat. Eventuell vorhandene Reste des niederen Alkohols können beispielsweise durch Wasserdampf entfernt werden. In der Regel ist die Zone niederen Druckes ein geschlossener Behälter, aus dem mit einer Pumpe die Lösungsmitteldämpfe abgezogen werden. Diese können nach Kondensation wieder in den Prozeß zurückgeführt werden. Der Druck in der Zone niedrigen Druckes beträgt zwischen 0,02 Bar und 2,0 Bar, vorzugsweise zwischen 0,1 und 1 Bar.

Die Fibride werden anschließend mit bekannten mechanischen Methoden z.B. durch Absaugen, Zentrifugieren usw. von Großteil des nicht verdampften Lösungsmittels befreit, falls erforderlich mit Wasser gewaschen und dann entweder in feuchter Form den Anwendungen zugeführt oder mechanisch aufgelockert zu einer Dichte von 10 bis 200 g/l, vorzugsweise 30 bis 100 g/l und anschließend im heißen Gasstrom getrocknet.

Ein wesentlicher Vorteil des erfindungsgemäßen Verfahrens ist es, daß die Fibride direkt bei der Verdüsung entstehen und dadurch das umständliche und energieaufwendige Zweistufenverfahren, bestehend aus Herstellung unendlich langer Plexusfäden und nachträglicher mechanischer Zerkleinerung, vermieden wird. Da die Plexusfäden eine hohe Dehnbarkeit haben, läßt sich diese mechanische Zerkleinerung nur mit hohem Energieaufwand durchführen.

Dieser verfahrensmäßige Vorteil sowie die stofflichen Vorteile der erfindungsgemäßen Polyoxymethylenfibride waren nicht vorhersehbar und sind daher als überraschend anzusehen.

Die nachfolgenden Beispiele sollen die Erfindung näher erläutern.

Beispiel 1

In einem Druckbehälter, der ein Volumen von 70 l hat und mit einem fünfblättrigen Mehrstufen-Impuls-Gegenstrom-Rührer versehen ist, werden 2 kg Copolymeres aus 98 Gew.-% Trioxan und 2 Gew.-% Äthylenoxid, das einen RSV-Wert von 0,82 dl/g hat und 20 ml Triäthylamin in einem Gemisch aus 13 l Methanol und 7 l Wasser bei 160°C unter Rührung aufgelöst. Mit Hilfe von Stickstoff wird ein Gesamtdruck von 30 Bar eingestellt. Nach Öffnung des Bodenventils fließt die Lösung durch eine Lochdüse von 1 mm Durchmesser und einer Länge von ca. 0,5 mm in den Gasraum eines geschlossenen Auffangbehälters mit 200 l Fassungsvermögen, der mit 40 l Wasser gefüllt ist und in dem eine Vakuumpumpe für einen Druck von 0,8 Bar sorgt. Nach Beendigung der Verdüsung wurde durch Überstreichen mit Wasserdampf und unter Beibehaltung des Druckes von 0,8 Bar 30 min. lang Methanol abgetriebenen. Die entstehenden Fibridsuspension wurde durch eine Bodenklappe entnommen und auf einen Feststoffgehalt von ca. 20% zentrifugiert.

Zur Ermittlung der spezifischen Oberfläche der erhaltenen Fibride wurde eine Probe gefriergetrocknet und mittels BET-Methode mit Argon gemessen. Die spezifische Oberfläche betrug 73 $m^2$/g, der Mahlgrad 50° SR.

Als indirektes Maß für die Faserlängenverteilung dient weiterhin die Faserklassierung in dem Faserklassiergerät nach Brecht Holl. In diesem Gerät werden 2 g Fasern für 10 min. mit Hilfe von Wasserstrahlen bei 0,5 bar Wasserdruck und einer pulsierenden Saugmembran (mit größtmöglichen Hub) nacheinander durch Siebe verschiedener Größe gespült. Angegeben wird der Rückstand auf den Sieben mit 1,2 mm, 0,4 mm und 0,12 mm Maschenweite sowie der Durchlauf in Prozent.

Bei der vorstehend beschriebenen Faserklassierung wurden folgende Fraktionen bestimmt:

| | |
|---|---|
| Rückstand 1,2 mm | 0% |
| Rückstand 0,4 mm | 17% |
| Rückstand 0,12 mm | 54% |
| Durchlauf 0,12 mm | 29% |

Mit diesen Fibriden werden auf einem Rapid-Köthen-Blattbildungsgerät Papierblätter von 160 g/$m^2$ hergestellt. An diesen Blättern wurde eine Reißfestigkeit von 14,3 N/$mm^2$ gemessen.

Vergleichsversuch 1

Wie in Beispiel 1 beschrieben, wurden 2 kg des gleichen Copolymeren in 20 l Methyläthylketon

unter gleichen Temperatur- und Druckbedingungen gelöst und durch die gleiche Düse in den gleichen Behälter verdüst, wobei ebenfalls ein Druck von 0,8 Bar aufrechterhalten wurde. Das entstandene Produkt bestand ausschließlich aus kontinuierlichen Plexusfäden, die in dieser Form nicht zur Papierherstellung geeignet waren. Daher wurde eine Probe mittels eines Scheibenrefiner in 6 Durchgängen zerkleinert. An den so hergestellten Fibriden wurden folgende Werte gefunden.

| | |
|---|---|
| Spez. Oberfläche | : 39 $m^2/g$ |
| Mahlgrad | : 27° SR |
| Faserklassierung: | |
| Rückstand 1,2 mm | : 3% |
| Rückstand 0,4 mm | : 4% |
| Rückstand 0,12 mm | : 26% |
| Durchlauf 0,12 mm | : 67% |
| Reißfestigkeit des Blattes (160 $kg/m^2$) | : 0,37 $N/mm^2$ |

Auch bei Reduzierung der Polymerkonzentration auf 0,01 kg/l entstanden für die Papierherstellung ungeeignete Plexusfäden.

Vergleichsversuch 2

Es wurde wie in Beispiel 1 verfahren. Die Lösungsmittelzusammensetzung betrug jedoch 5 l Methanol und 15 l Wasser. Es entstanden ausschließlich Plexusfäden, die in dieser Form nicht für die Papierherstellung geeignet waren.

Beispiel 2

Es wurde wie in Beispiel 1 verfahren. Der RSV-Wert des verwendeten Polymeren lag jedoch bei 1,0 dl/g und die Lösungsmittelzusammensetzung betrug 15 l Methanol und 5 l Wasser. An den erhaltenen Fibriden wurden folgende Werte gemessen:

| | |
|---|---|
| Spez. Oberfläche | : 98 $m^2/g$ |
| Mahlgrad | : 61° SR |
| Faserklassierung: | |
| Rückstand 1,2 mm | : 0% |
| Rückstand 0,4 mm | : 5% |
| Rückstand 0,12 mm | : 55% |
| Durchlauf 0,12 mm | : 40% |
| Papierreißfestigkeit | : 13,2 $N/mm^2$ |

Beispiel 3

Es wurde wie in Beispiel 1 verfahren, statt Methanol wurde jedoch Isopropanol verwendet. An den erhaltenen Fibriden wurden folgende Werte gemessen:

| | |
|---|---|
| Spez. Oberfläche | : 108 $m^2/g$ |
| Mahlgrad | : 68° SR |
| Faserklassierung: | |
| Rückstand 1,2 mm | : 6% |
| Rückstand 0,4 mm | : 4% |
| Rückstand 0,12 mm | : 24% |
| Durchlauf 0,12 mm | : 66% |
| Papierreißfestigkeit | : 11,7 $N/mm^2$ |

**Patentansprüche**

1. Polyoxymethylenfibride mit einer reduzierten spezifischen Viskosität von 0,4 und 2,0 dl/g, (gemessen in Butyrolacton, das 2 Gew.-% Diphenylamin enthält, bei 140°C in einer Konzentration von 0,5 g/100 ml) einer spezifischen Oberfläche (nach BET mit Argon) von 50 bis 200 $m^2/g$ (gefriertrocknet) und einem Mahlgrad von 30 bis 80° SR.

2. Polyoxymethylenfibride nach Anspruch 1, dadurch gekennzeichnet, daß die spezifische Oberfläche 70 bis 110 $m^2/g$ beträgt.

3. Polyoxymethylenfibride nach Anspruch 1 und 2, dadurch gekennzeichnet, daß der Mahlgrad zwischen 40 und 70° SR liegt.

4. Verfahren zur Herstellung von Polyoxymethylenfibriden durch Flash-Verdampfung einer überhitzten Lösung des Polymeren durch eine Düse in eine Zone niedrigen Druckes, dadurch gekennzeichnet, daß als Lösungsmittel eine Mischung von 50—95 Gew.-% eines niederen Alkohols mit 1—4 C-Atomen und 5—50 Gew.-% Wasser verwendet wird.

5. Verfahren nach Anspruch 4, dadurch gekennzeichnet, daß als Alkohol Methanol oder Isopropanol zum Einsatz kommt.

6. Verfahren nach Anspruch 4 und 5, dadurch gekennzeichnet, daß als Lösungsmittel eine Mischung von 55—90 Gew.-% eines niederen Alkohols und 10—45 Gew.-% Wasser benutzt wird.

7. Verwendung der Polyoxymethylenfibride, gemäß Anspruch 1 bis 3, ggf. in Abmischung mit anderen Faserstoffen, zur Herstellung von Papier.

**Revendications**

1. Fibrilles de polyoxyméthylène, ayant une viscosité spécifique réduite comprise entre 0,4 et 2,0 dl/g la mesure étant effectuée dans de la butyrolactone, qui contient 2% en poids de diphénylamine, à 140°C à une concentration de 0,5 g/100 ml), une surface spécifique (d'après la méthode BET en utilisant de l'argon) de 50 à 200 $m^2/g$ après lyophilisation et un degré de raffinage de 30 à 80° SR.

2. Fibrilles de polyoxyméthylène selon la revendication 1, caractérisées en ce que leur surface spécifique se situe entre 70 et 110 $m^2/g$.

3. Fibrilles de polyoxyméthylène selon les revendications 1 et 2, caractérisées en ce que leur indice de raffinage se situe entre 40 et 70° SR.

4. Procédé de préparation des fibrilles de polyoxyméthylène par évaporation rapide ("flash") d'une solution surchauffée du polymère par passage à travers une buse pour parvenir dans une zone à plus faible pression, procédé caractérisé en ce qu'on utilise comme solvant un mélange de 50 à 95% en poids d'un alcool inférieur ayant 1 à 4 atomes de carbone et de 5 à 50% en poids d'eau.

5. Procédé selon la revendication 4, caractérisé en ce qu'on utilise comme alcool du méthanol ou de l'isopropanol.

6. Procédé selon les revendications 4 et 5, caractérisé en ce qu'on utilise comme solvant un mélange de 55 à 90% en poids d'un alcool inférieur et de 10 à 45% en poids d'eau.

7. Utilisation des fibrilles de polyoxyméthylène, obtenues selon l'une des revendications 1 à 3, éventuellement en mélange avec d'autres substances fibreuses, pour la fabrication du papier.

**Claims**

1. Polyoxymethylene fibrids with a reduced specific viscosity of 0.4 and 2.0 dl/g (measured at 140°C in butyrolactone, which contains 2% by weight of diphenylamine, in a concentration of 0.5 g/100 ml), a specific surface area (according to BET, using argon) of 50 to 200 $m^2/g$ (freeze-dried) and a freeness of 30 to 80° SR.

2. Polyoxymethylene fibrids as claimed in claim 1, in which the specific surface area is 70 to 110 $m^2/g$.

3. Polyoxymethylene fibrids as claimed in claim 1 or 2, in which the freeness is between 40 and 70° SR.

4. A process for the production of polyoxymethylene fibrids by flash-evaporation of a superheated solution of the polymer through a nozzle into a low-pressure zone, which comprises using a mixture of 50—95% by weight of a lower alcohol with 1—4 C atoms and 5—50% by weight of water as the solvent.

5. A process as claimed in claim 4, wherein methanol or isopropanol is used as the alcohol.

6. A process as claimed in claim 4 or 5, wherein a mixture of 55—90% by weight of a lower alcohol and 10—45% by weight of water is used as the solvent.

7. Use of the polyoxymethylene fibrids as claimed in any of claims 1 to 3, optionally as a mixture with other fibrous substances, for the production of paper.